# EUROPÄISCHE PATENTSCHRIFT

(11) **EP 4 294 604 B1**
(45) Veröffentlichungstag und Bekanntmachung des Hinweises auf die Patenterteilung: **15.01.2025**
(21) Anmeldenummer: 21707661.1
(22) Anmeldetag: 22.02.2021
(51) Int. Cl.: B25J 5/02

(54) **FAHRSCHIENE FÜR EINEN ROBOTER UND ROBOTERSYSTEM MIT EINER SOLCHEN FAHRSCHIENE SOWIE VERFAHREN ZUR HERSTELLUNG EINER SOLCHEN FAHRSCHIENE**
RUNNING RAIL FOR A ROBOT, ROBOT SYSTEM HAVING A RUNNING RAIL OF THIS TYPE, AND METHOD FOR PRODUCING A RUNNING RAIL OF THIS TYPE
RAIL DE ROULEMENT POUR UN ROBOT, SYSTÈME DE ROBOT COMPRENANT UN TEL RAIL DE ROULEMENT, ET PROCÉDÉ DE PRODUCTION D'UN TEL RAIL DE ROULEMENT

(43) Veröffentlichungstag der Anmeldung: 27.12.2023
(73) Patentinhaber: IPR-Intelligente Peripherien für Roboter GmbH, 75031 Eppingen (DE)
(72) Erfinder: KAMP, Markus, 47475 Kamp-Lintfort (DE); DOLL, Fredy, 77855 Achern (DE)
(74) Vertreter: Witte, Weller und Partner Patentanwälte mbB Stuttgart
(86) Internationale Anmeldenummer: PCT/EP2021/054269
(87) Internationale Veröffentlichungsnummer: WO 2022/174926

(56) Entgegenhaltungen:
- EP-A1- 3 441 523
- EP-B1- 0 062 096
- EP-B1- 3 378 605
- DE-C1- 10 035 655

## Beschreibung

### ANWENDUNGSGEBIET UND STAND DER TECHNIK

Die Erfindung betrifft eine Roboter-Fahrachse zur translativen Verlagerung eines Roboterschlittens sowie ein Robotersystem mit einer solchen Roboter-Fahrachse und einem entlang der Roboter-Fahrachse verfahrbaren Roboterschlitten, mittels dessen ein Roboter in einer Fahrrichtung verfahrbar ist. Die Erfindung betrifft darüber hinaus ein neuartiges Herstellungsverfahren zur Herstellung einer Roboter-Fahrachse.

Gattungsbildende Roboter-Fahrachsen sind aus dem Stand der Technik allgemein bekannt. Sie dienen der Bewegung eines herkömmlichen Industrieroboters entlang eines definierten und üblicherweise geradlinigen Bewegungspfades. Den Bedarf hierfür gibt es in vielen industriellen Anwendungsfeldern, beispielsweise in der Fertigung, wenn der Roboter an verschiedenen Stellen eingesetzt werden soll, oder in Fällen, in denen der Roboter bestimmungsgemäß ein Werkstücklager anfahren können soll, um dort Teile zu ergreifen. Insbesondere beim Bau von Personenkraftwagen finden gattungsgemäße Roboter-Fahrachsen Verwendung. Sie werden hier an verschiedenen Bearbeitungspositionen eingesetzt, um einen Roboterschlitten mit dem darauf angebrachten Roboter zwischen Fahrzeugheck und Fahrzeugfront verfahren zu können. Gattungsgemäße Roboter-Fahrachsen sind üblicherweise einige Meter lang, insbesondere etwa 3 m, 6 m oder 12 m. Aber auch längere Fachachsen mit bis zu 100m sind möglich. Im Falle langer Fahrwegekann dies auch mittels mehrerer gekoppelter Roboter-Fahrachsen erzielt werden.

Bekannte Roboter-Fahrachsen sind meist als vollständig metallische Fahrachsen ausgebildet, die meist überwiegend aus Komponenten aus Aluminium oder Stahl bestehen. Dies führt zu einem vergleichsweise hohen Preis der Fahrachsen.

Aus der EP 3 378 605 A1 und der EP 3 441 523 A1 sind bereits Gestaltungen von Roboter-Fahrachsen bekannt, bei denen Beton einen wesentlichen Teil von Roboter-Fahrachsen bildet. Die dort beschriebenen Gestaltungen sind daher in Hinblick auf die Materialkosten von Vorteil. Auch sind die Dämpfungseigenschaften der in den Dokumenten beschriebenen Fahrachsen sehr gut. In der Praxis hat sich jedoch herausgestellt, dass die Herstellung solcher Fahrachsen recht aufwändig ist, so dass der Vorteil der Materialkosten in der Praxis die Gesamtkosten für die Herstellung gegenüber klassischen Fahrachsen aus Stahl oder Aluminium kaum senkt.

### AUFGABE UND LÖSUNG

Aufgabe der Erfindung ist es, eine Fahrachse zur Verfügung zu stellen, welche hohen Qualitätsanforderungen genügt und günstig in hohen Stückzahlen hergestellt werden kann.

Zur Lösung dieser Aufgabe wird eine Roboter-Fahrachse vorgeschlagen, die über zwei parallel verlaufende Hauptträger verfügt, die jeweils außenseitig durch ein metallisches Profil in Form eines Hohlprofils oder C-Profils begrenzt werden. Sind die vorzugsweise als Rechteckprofile ausgebildeten Profile als Hohlprofile ausgestaltet, so sind sie zumindest in Teilabschnitten umfänglich geschlossen, wobei sie in der im weiteren noch beschriebenen Weise vorzugsweise Aussparungen in Form von Durchbrechungen aufweisen. Sind die Rechteckprofile als C-Profile ausgestaltet, so weisen sie mindestens drei vorzugsweise im rechten Winkel zueinander stehende Wandungen auf, die einen Innenraum umgeben, während sie auf einer Seite offen sind, entweder indem an der offenen Seite keinerlei Wandung vorgesehen ist oder indem die vierte Wandung zwar vorhanden ist, durch eine Profilunterbrechung des Querschnitts jedoch unterbrochen ist, so dass sich in Längsrichtung des Profils eine Art Schlitz erstreckt.

Diese Hauptträger, deren Außenform durch die genannten Profile definiert ist, tragen jeweils eine Führungsschiene, die insbesondere mittels einer Schraubverbindung an den Profilen angebracht ist. Alternative Fügetechniken zur Anbringung der Führungsschienen an den Profilen umfassen Schweißen, Nieten oder je nach Anwendungsfall auch Kleben. Auf den Führungsschienen liegt im Betrieb der Roboterschlitten auf, der insbesondere auf Fahrrollen in Haupterstreckungsrichtung der Fahrachse verfahrbar ist. Die Hauptträger sind mit einer Verbindungsstruktur aus Beton oder aus einem Polymermaterial, insbesondere einem ausgehärteten Strukturschaum aus Polymermaterial, oder aus Metallschaum miteinander verbunden. Diese Verbindungsstruktur ist zwischen den Hauptträgern angeordnet. Zusätzlich sind auch die Profile selbst mit einer Innenstruktur aus Beton oder aus Polymermaterial oder Metallschaum versehen.

Eine Innenstruktur aus Beton, aus Metallschaum oder aus Polymermaterial in den Profilen und im Zwischenbereich zwischen den Hauptträgern hat sich als sehr vorteilhaft zur Reduzierung der Schallemissionen im Betrieb sowie zur Erzielung einer Dämpfung und somit zur Reduzierung von Vibrationen erwiesen. Hierdurch wird Verschleiß an den Hauptträgern und den Führungsschienen reduziert. Beton führt zusätzlich zu einer deutlich erhöhten Stabilität, da er sehr gut in Querrichtung wirkende Druckkräfte aufnehmen kann.

Wird Beton verwendet, so bestehen die Innenstrukturen und die Verbindungsstruktur vorzugsweise aus einfachem Baubeton / Zementbeton. Auch ist es möglich, den Beton mit Fasereinlagen zu versehen, vorzugsweise mit Netzen oder Matten. Ein solcher Beton wird auch als Textilbeton bezeichnet. Zudem wird es als vorteilhaft angesehen, wenn der Beton mit Armierungen versehen ist, also mit einer eingegossenen Metallstruktur.

Findet Polymermaterial Anwendung, so handelt es sich vorzugsweise um einen hieraus bestehenden ausgehärteten Strukturschaum, beispielsweise um Polyurethanschaum oder Polystyrol, oder um ein Hartschaumstoff.

Findet Metallschaum Anwendung, so handelt es sich hierbei um ein Zweiphasensystem, umfassend Bläschen, die durch feste Metall-Wände getrennt sind. Hergestellt wird ein solcher Metallschaum vorzugsweise durch Schäumen von Schmelzen mit Hilfe von Treibmitteln oder mittels Gasinjektion erzeugt.

Die Innenstruktur innerhalb der Profile führt in genannter Art insbesondere zu vorteilhaften Dämpfungseigenschaften, insbesondere bei schnellen und ruckhaften Bewegungen des Roboterschlittens oder des darauf montierten Roboters. Insbesondere bei der Verwendung von Beton kann die Innenstruktur in der Praxis weiterhin dazu führen, dass vergleichsweise dünnwandige Profile verwendet werden können. Neben den technischen Vorteilen ist eine erfindungsgemäße Fahrschiene wirtschaftlich vorteilhaft. Aufgrund einfacher Herstellbarkeit und geringer Materialkosten ist sie sowohl klassischen Fahrschienen aus Metall als auch den eingangs genannten Fahrschienen aus Beton und Metall überlegen.

Insbesondere liegt die mittlere Wandungsstärke der Profile unterhalb von 8 mm, vorzugweise bei maximal 6 mm. Derart geringe Wandungsstärken können bei Verwendung einer erfindungsgemäßen Roboter-Fahrachse genutzt werden, selbst wenn auf dieser ein Roboterschlitten mit aufgesetztem Roboter mit einer Gesamtmasse von mehr als 1000 kg oder auch mehr als 1500 kg ruht. Vorzugsweise beträgt diese Gesamtmasse von Roboterschlitten und Roboter bei Verwendung von Wandungsstärken unterhalb von 8 mm jedoch vorzugsweise nicht mehr als 3000 kg, im Falle von Wandungsstärken unterhalb von 6 mm vorzugsweise nicht mehr als 2500 kg.

Auch können bei einer erfindungsgemäßen Gestaltung die Profile einen vergleichsweise kleinen Querschnitt aufweisen. Bezogen auf die oben genannte bevorzugte Masse des Roboterschlittens mit Roboter beträgt die Breite der Profile in Querrichtung vorzugsweise 180 mm oder weniger. Die Innenstruktur aus Beton, aus Polymermaterial oder aus Metallschaum muss die jeweiligen Profile nicht vollständig ausfüllen. Es wird jedoch angestrebt, dass zumindest die nach im Betrieb oben weisende Wandung der Profile innenseitig vollständig mit der Innenstruktur in Kontakt ist. In Hinblick auf die gegenüberliegende und im Betrieb untere Wandung des Profils ist dies jedoch nicht erforderlich, was das Gießen des Betons, des Polymermaterials oder des Metallschaums während der Herstellung vereinfachen kann.

Die Verbindungsstruktur zwischen den Hauptträgern dient vor allem der Übertragung von Drucckräften zwischen den Hauptträgern. Dies gilt insbesondere für die Verwendung von Beton und von Metallschaum. Jedoch kann auch geeignetes Polymermaterial zur Kraftübertragung beitragen. Die Verbindungsstruktur steht mit beiden Profilen der Hauptträger in Kontakt.

Bezogen auf die Haupterstreckungsrichtung der Fahrachse ist vorzugsweise vorgesehen, dass sowohl die Innenstruktur in den Profilen als auch die Verbindungsstruktur sich zumindest annähernd (>80%) über die Gesamtlänge der Profile erstreckt. Vorzugsweise bildet eine Oberseite der Verbindungsstruktur eine durchgehende, nach oben weisende Betonfläche, Metallschaumfläche oder Polymerfläche von einem Ende der Fahrachse bis zum gegenüberliegenden anderen Ende.

Eine erfindungsgemäße Fahrachse weist üblicherweise eine Länge von 3 m, 6 m oder 12 m auf. Werden größere Längen benötigt, so können eine Mehrzahl von Fahrachsen hintereinander montiert werden.

Vorzugsweise bilden die Verbindungsstruktur und die Innenstrukturen eine zusammenhängende Betonstruktur, Metallschaumstruktur oder Polymermaterialstruktur. Zur Erzielung dessen kann insbesondere vorgesehen sein, dass die Profile als Hohlprofile ausgebildet sind und an einer Längsseite über die bereits genannte mindestens eine Aussparung verfügen, durch die die Betonstruktur, die Metallschaumstruktur oder Polymermaterialstruktur hindurchragt. Vorzugsweise sind mehrere Aussparungen vorgesehen, wobei die lichte Querschnittsfläche der einzelnen Aussparungen vorzugsweise jeweils mindestens 15 cm² beträgt. Wenn die Profile als C-Profile ausgebildet sind, verfügen sie aufeinander zu weisend jeweils über eine sich in Haupterstreckungsrichtung der Profile erstreckende Profilunterbrechung, durch die die Betonstruktur, die Metallschaumstruktur oder die Polymermaterialstruktur vorzugsweise hindurchragt. Die Breite der Profilunterbrechung beträgt vorzugsweise mindestens 3 cm. Im Falle einer Gestaltung der Profile als C-Profile wird es als vorteilhaft angesehen, wenn die mit der Profildurchbrechung ausgestaltete Wandung des Profils einseitig oder beidseitig über Wandungsabschnitte verfügt, die sich in Richtung der Profildurchbrechung und im Falle zweier Wandungsabschnitte aufeinander zu erstrecken, und dass diese Wandungsabschnitte von der genannten Betonstruktur, der Metallschaumstruktur oder der Polymermaterialstrukturbeidseitig eingefasst sind. Hierdurch wird eine sehr feste Verbindung zwischen der Betonstruktur, der Metallschaumsatruktur bzw. Polymermaterialstruktur und den C-Profilen erreicht.

Die mindestens eine Aussparung je Profil, vorzugsweise in Form einer Durchbrechung, bzw. die Profilunterbrechungen an den Profilen sind in Richtung des Zwischenraums zwischen den Profilen ausgerichtet und verbinden somit den jeweiligen Profilinnenraum mit dem Zwischenraum. Dies erleichtert das Einbringen des Betons, des Metallschaums oder des Polymermaterials, da in einem gemeinsamen Gießvorgang und vorzugsweise vom Zwischenraum aus allen genannten Räumen mit Beton, Metallschaum oder Polymermaterial ausgegossen werden können.

Zudem hilft die sich einstellende Einheitlichkeit der Struktur, insbesondere der Betonstruktur, umfassend sowohl die Innenstrukturen als auch die Zwischenstruktur bei der Übertragung von Drucckräften zwischen den äußeren Wandungen der jeweiligen Profile und verbessert so sowohl die Dämpfung als auch die Festigkeit der Fahrachse.

Die Hauptträger sind jedoch vorzugsweise nicht ausschließlich über die Verbindungsstruktur verbunden.

Stattdessen ist vorzugsweise vorgesehen, dass die Hauptträger miteinander über metallische Verbindungselemente verbunden sind, wobei insbesondere vorzugsweise eine Mehrzahl dieser Verbindungselemente die Hauptträger leiterartig miteinander verbindet. Die Verbindungselemente sind vorzugsweise als metallische Hohlprofile oder als Metallbleche vorgesehen, deren Erstreckungsrichtung mit der Haupterstreckungsrichtung der Hauptträger einen Winkel von 90° einschließen. Die Stirnenden der Verbindungselemente sind an den beiden Profilen befestigt, insbesondere per Schraub- oder Schweißverbindung.

Die Verbindungselemente sind vorzugsweise bis auf ihre jeweiligen Stirnenden vollständig vom Beton der Verbindungsstruktur und gegebenenfalls auch der Innenstruktur umgeben. Hierdurch wird die Stabilität der Fahrachse positiv beeinflusst. Es sind jedoch auch Gestaltungen denkbar, bei denen die Verbindungselemente sich nur teilweise mit Ihrer Außenseite in Kontakt mit der Betonstruktur oder der Polymermaterialstruktur befinden oder vollständig frei von Kontakt mit der Betonstruktur oder Polymermaterialstruktur sind.

Im Falle der Verwendung von Hohlprofilen ist vorzugsweise vorgesehen, dass die metallischen Verbindungselemente an einer Außenseite von aufeinander zueinander weisenden Wandungen der

Profile befestigt ist. Die in dieser Wandung vorzugsweise vorgesehenen Aussparungen, durch die hindurch die Betonstruktur, die Metallschaumstruktur oder Polymermaterialstruktur ragt, sind bezogen auf die Haupterstreckungsrichtung vorzugsweise zwischen zwei metallischen Verbindungselemente angeordnet.

Im Falle der Verwendung von C-Profilen ist vorzugsweise vorgesehen, dass die metallischen Verbindungselemente an einer Innenseite von voneinander weg weisenden Wandungen der C-Profile befestigt sind, so dass sie sich durch einen Innenraum der Profile, durch die Profilunterbrechung des C-Profils sowie durch den Zwischenraum hindurch erstrecken.

Alternativ oder zusätzlich zu den genannten Verbindungselementen, die sich insbesondere vorzugsweise in Kontakt mit der Innenstruktur und/oder der Verbindungsstruktur befinden, kann bei einer Roboter-Fahrachse auch vorgesehen sein, dass die Hauptträger mit mindestens einer Standplatte versehen sind. Die Standplatte selbst steht vorzugsweise nicht in Kontakt mit der Betonstruktur, der Metallschaumstruktur oder der Polymermaterialstruktur und wird insbesondere vorzugsweise auch erst nach dem Eingießen und Aushärten des Betons, des Metallschaums oder Polymermaterials angebracht.

Es handelt sich vorzugsweise um mindestens eine Standplatte, die an einer Unterseite der Profile vorgesehen ist und mit diesen durch eine Schraub- oder Schweißverbindung verbunden ist. Die Roboter-Fahrachse kann eine einzige Standplatte aufweisen, die sich zumindest annähernd über die Gesamtlänge der Fahrachse erstreckt. Es können jedoch auch eine Mehrzahl von Standplatten vorgesehen sein, die an den jeweils beiden Hauptträgern schwellenartig befestigt sind oder die jeweils nur an einem der Hauptträger befestigt sind.

Die mindestens eine Standplatte bildet üblicherweise die Bodenplatte, die direkt auf einem Hallenboden aufgestellt und an diesem verankert wird. Die Standplatte kann jedoch aufgrund von zusätzlichen Zwischenelementen wie Stellfüßen oder bei Verwendung auf einem Portal auch von einem Hallenboden beabstandet angeordnet und mittelbar mit dem Hallenboden verbunden sein. Zur Befestigung auf einem Hallenboden oder an einem Zwischenelement der genannten Art weist die Standplatte vorzugsweise Löcher auf, durch die hindurch beispielsweise Schrauben zur Fixierung der Fahrachse am Hallenboden oder einem Zwischenelement festgeschraubt werden können.

Insbesondere zusätzlich zu der mindestens einen genannten Standplatte und zu dem mindestens einen genannten Verbindungselement, jedoch auch bei einer Gestaltung ohne Standplatte und ohne Verbindungselemente, können an den Hauptträgern Zuganker vorgesehen sein, die sich in die Innenstruktur oder die Verbindungsstruktur erstrecken und somit eine festere Verbindung zwischen den Hauptträgern und dem Beton, dem Metallschaum bzw. dem Polymermaterial ermöglichen. Solche Zuganker weisen eine Aufweitung auf, die nach Eingießen bzw. Einbringen in Beton, in den Metallschaum oder in die Polymasse bzw. den Polymerschaum eine formschlüssige Sicherung bildet. Insbesondere können die genannten Zuganker an den zueinander gerichteten Wandungen der Profile vorgesehen sein und sich in den Zwischenraum erstrecken, um dort in die Verbindungsstruktur aus Beton, aus Metallschaum oder Polymermaterial eingebettet zu werden. Es ist allerdings auch möglich, Zuganker an der Innenseite der Wandungen des Profils vorzusehen und hierdurch die Verbindung zwischen den Profilen und der Innenstruktur zu verbessern. Die Zuganker sind vorzugsweise an den Profilen angeschweißt oder angeschraubt.

Eine alternative Möglichkeit, die Verbindung zwischen dem Beton, dem Metallschaum und der Polymermaterial herzustellen oder zu verbessern, besteht darin, dass zwischen einer Innenwand der Profile und der Innenstruktur und/oder zwischen einer Außenwand der Profile oder dem metallischen Verbindungselement und der Verbindungsstruktur eine Schicht aus einem Haftvermittlungsmittel vorgesehen ist. Insbesondere bei Verwendung von Beton ist dies von Vorteil und begünstigt die Übertragbarkeit von Zugkräften zwischen dem Beton und den Profilen.

Ein solches Haftvermittlungsmittel kann insbesondere eine raue Oberflächenstruktur an den Profilen oder den Verbindungselementen zur Verfügung stellen, mit der der Beton oder gegebenenfalls auch das Polymermaterial eine formschlüssige Verbindung eingeht. Vorzugsweise umfasst das Haftvermittlungsmittel eine während der Herstellung flüssige Klebermasse sowie ein damit an den metallischen Oberflächen fixiertes feinkörniges Granulat, vorzugsweise mit einer mittleren Korngröße zwischen 1 mm und 5 mm. Die Klebermasse, die nach Aufbringung auf der Oberfläche und Einbringung des Granulats verfestigt, wird vorzugsweise durch ein Harz gebildet, insbesondere durch Epoxidharz. Das Granulat wird vorzugsweise durch scharfkantigen Korundgranulat gebildet.

Von besonderem Vorteil ist es, wenn mindestens eine im Betrieb nach oben weisender Wandung, auf deren Oberseite die Führungsschiene befestigt ist, nach innen weisend das beschriebene Haftvermittlungsmittel aufweist. Ein inniger Halt zwischen dieser Profilwandung und der Innenstruktur ist für die Erzielung der gewünschten Dämpfung von großem Wert.

Die Erfindung betrifft neben der Roboter-Fahrachse als solcher auch ein Robotersystem mit einer Fahrachse der beschriebenen Art. Zusätzlich weist das Robotersystem einen entlang der Fahrachse verlagerbaren Roboterschlitten auf, auf dem ein Roboter fest montiert oder montierbar ist.

Der Roboterschlitten weist Rollen auf, mittels derer er auf den Führungsschienen der Fahrachse verfahren werden kann. Er kann zu diesem Zweck extern angetrieben sein, beispielsweise mit einem Seilzugsystem. Üblich ist jedoch, dass der Roboterschlitten selbst über einen mitfahrenden Antriebsmotor verfügt.

Zur Versorgung des Roboterschlittens und des Roboters mit Elektrizität und gegebenenfalls auch mit Verbrauchsmaterialen wie Lack sind vorzugsweise Leitungen vorgesehen, die mindestens ein Leitungsbündel bilden, welches im einem Ablageraum zwischen den Führungsschienen angeordnet ist.

Die Erfindung betrifft weiterhin ein Verfahren zur Herstellung einer Roboter-Fahrachse der beschriebenen Art und darauf aufbauend zur Herstellung eines Robotersystems der beschriebenen Art.

Zur Herstellung der Roboter-Fahrachse werden die beiden Profile in paralleler Ausrichtung positioniert und in dieser Ausrichtung fixiert. Vorzugsweise sind die Profile zu diesem Zeitpunkt bereits über angeschweißte oder angeschraubte Verbindungselementen miteinander verbunden, welche eine korrekte Relativanordnung der Profile gewährleistet. Die Profile werden vorzugsweise in einer gegenüber der späteren Nutzausrichtung umgedrehten Ausrichtung fixiert, so dass die spätere Oberseite nach unten weist.

Anschließend wird in die Profile sowie in einen Zwischenraum zwischen den Profilen Beton, Metallschaum oder Polymermaterial eingebracht oder die Profile und der Zwischenmaterial werden hiermit ausgeschäumt. Der aushärtete Beton bzw. das ausgehärtete Polymermaterial bzw. der ausgehärtete Metallschaum bildet dadurch die beschriebene Innenstruktur und die beschriebene Verbindungsstruktur. Durch die bevorzugte umgedrehte Ausrichtung wird erreicht, dass die Innenstruktur selbst dann, wenn die Profile nicht vollständig durch sie ausgefüllt sind, mindestens an einer im Betrieb nach oben weisenden Wandung flächig anliegt.

Das Einbringen oder Eingießen des Betons, des Metallschaums oder es Polymermaterials zur Herstellung der Innenstrukturen und der Verbindungsstruktur kann isoliert voneinander und gegebenenfalls auch nacheinander erfolgen, so dass die beiden Innenräume und der Zwischenraum nicht in einem Zug ausgegossen werden. Von Vorteil ist es allerdings, wenn weitgehend gleichzeitig der Beton, der Metallschaum oder das Polymermaterial sowohl in die Innenräume als auch in den Zwischenraum eingebracht wird, vorzugsweise indem nur an einer Stelle der flüssige Beton, der Metallschaum oder das flüssige Polymermaterial zugeführt wird und sich von hier aus im Zwischenraum und den Innenräumen der Profile verteilt.

Dies kann insbesondere dadurch erreicht werden, dass die verschiedenen Räume durch die beschriebenen Aussparungen oder Profilunterbrechungen miteinander verbunden sind.

Vorzugsweise wird die Haftkraft zwischen dem Beton, dem Metallschaum oder dem Polymermaterial und den Oberflächen der Profile und/oder der Verbindungselemente verbessert, indem vor dem Einbringen des Betons, des Metallschaums oder des Polymermaterials ein Haftvermittlungsmittel auf den genannten Oberflächen aufgebracht wird, so dass diese zumindest teilweise mit dem Haftvermittlungsmittel bedeckt sind, wenn der Beton, der Metallschaum oder das Polymermaterial eingebracht wird. Welche Schritte zur Verbesserung der Haftung zweckmäßig sind, hängt vor allem auch davon ab, ob Beton, Polymermaterial oder Metallschaum die Innenstruktur bildet. Bei Polymermaterial werden insbesondere durch chemische Aktivierung der Oberflächen und/oder Plasmabehandlung gute Ergebnisse erzielt.

Das Haftvermittlungsmittel wird vorzugsweise in einem zweistufigen Verfahren aufgebracht, bei dem zunächst eine flüssige Klebermasse auf den Oberflächen aufgebracht wird. Dies kann im Falle der Innenräume der Profile insbesondere durch Einführen einer Sprühlanze erfolgen, die durch die offenen Stirnenden der Profile oder seitlich durch die genannten Aussparungen oder Profilunterbrechungen in die Profile einfährt und dort durch Sprühen oder durch Abgabe eines Nebels die Klebermasse einbringt, die sich dann an den Oberflächen niederschlägt. Insbesondere kann es sich um ein Epoxidharz oder ein anderweitiges Harz handeln, ggf. mit weiteren Zusätzen oder Bestandteilen. Gleichzeitig oder vorzugsweise in einem späteren Verfahrensschritt wird ein feinkörniges Granulat eingebracht, vorzugsweise mit einer mittleren Korngröße zwischen 1 mm und 5 mm. Die Körner dieses Granulats gelangen auf den Film der Klebermasse, welcher sie fixiert. Sobald die Klebermasse ausreichend verfestigt und das Granulat daher ausreichend an den metallischen Oberflächen fixiert ist, kann das Gießen des Betons oder des Polymermaterials oder das Einbringen des Metallschaums folgen.

Der Verbund aus den beiden Hauptträgern und der durch das Eingießen des Betons, des Metallschaums oder des Polymermaterials gebildeten Struktur bildet den Hauptkörper einer Fahrachse. Hieran werden bei der Herstellung nachfolgend noch die eigentlichen Führungsschienen für den Roboterschlitten angebracht und gegebenenfalls nach Anbringung geschliffen, um Maßgenauigkeit und Parallelität zu gewährleisten. Weiterhin wird an der Unterseite mindestens eine Standplatte angebracht, die der Festlegung der Führungsschiene auf einem Untergrund wie einem Hallenboden dient.

Zur Vervollständigung des Robotersystems werden eine oder mehrere solcher Fahrachsen mit einem Roboterschlitten versehen, der den eigentlichen Roboter trägt.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 zeigt ein Robotersystem der beschriebenen Art mit einer Fahrachse, einem Roboterschlitten und einem hierauf befestigten Industrieroboter.
Fig. 2 zeigt den Hauptkörper der Fahrachse, bestehend primär aus zwei Hohlprofilen sowie einer Betonstruktur innerhalb der Profile und zwischen den Profilen.
Fig. 3 zeigt eine Metallstruktur vor Einbringung des Betons, die die beiden Hohlprofile sowie verbindende Verbindungselemente umfasst.
Fig. 4A bis 4F verdeutlichen exemplarisch die Herstellung einer Fahrachse der vorbeschriebenen Art.
Fig. 5 zeigt eine Bauweise einer Fahrachse mit Zugankern.
Fig. 6A bis 6C zeigen die Herstellung einer Fahrachse, bei der statt der genannten Hohlprofile C-Profile Verwendung finden.

### DETAILLIERTE BESCHREIBUNG DER AUSFÜHRUNGSBEISPIELE

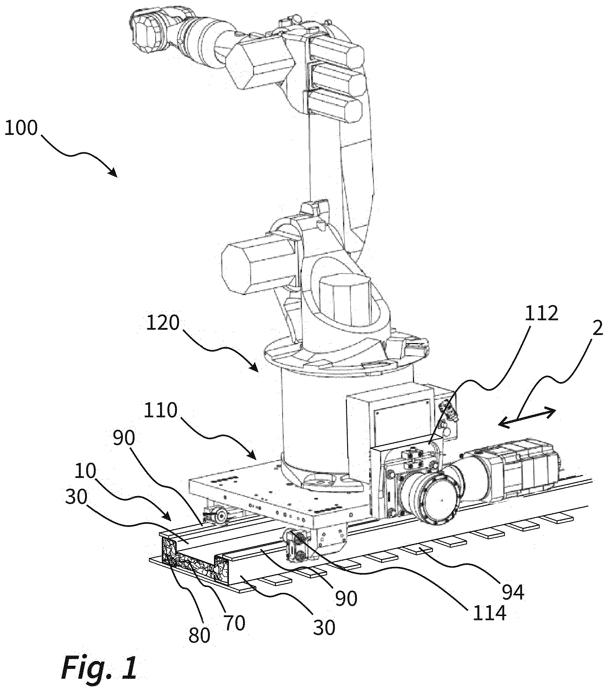

Figur 1 zeigt ein vollständiges Robotersystem 100, welches beispielsweise in der industriellen Fertigung von Kraftfahrzeugen Verwendung finden kann. Dieses Robotersystem 100 verfügt über einen Roboter 120 mit einem über mehrere Gelenke steuerbaren Roboterarm. Dieser Roboter 120 ist auf einem Roboterschlitten 110 montiert.

Der Roboterschlitten 110 ist in Verfahrrichtung 2 verfahrbar und verfügt hierfür über eine Antriebseinrichtung 112, mittels derer Rollen 114 angetrieben sind. Diese Rollen 114 ruhen auf Führungsschienen 90 einer Roboter-Fahrachse 10.

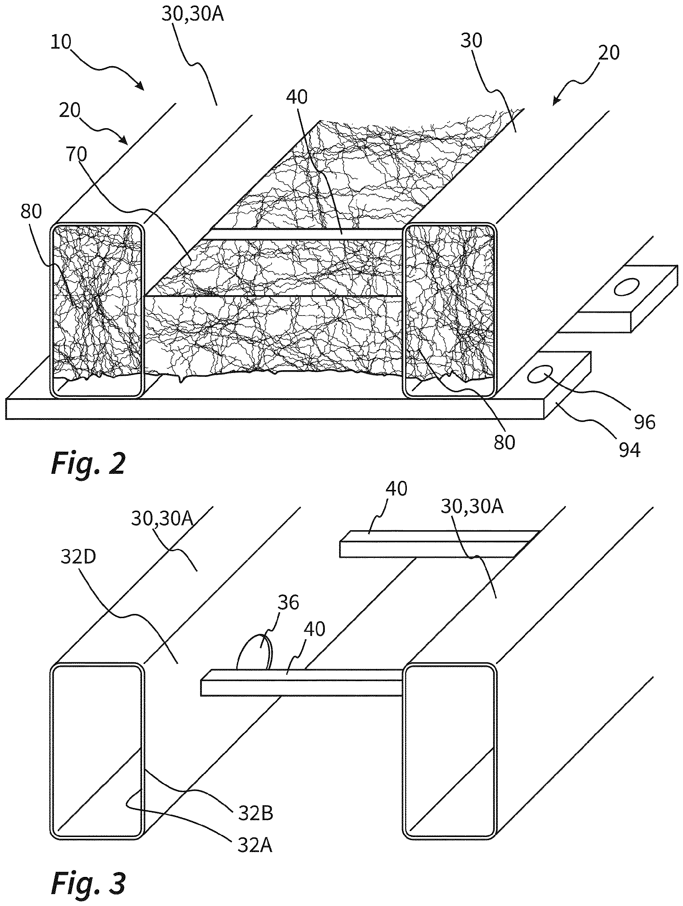

Die Roboter-Fahrachse 10, deren Hauptkörper auch in Figur 2 dargestellt ist, weist zwei Hauptträger 20 auf, an deren Oberseite die Führungsschienen 90 befestigt sind. Die Hauptträger 20 wiederum verfügen jeweils über ein die Außenkontur der Hauptträger 20 bildendes Profil 30, welches im Falle der Ausgestaltung der Figuren 2 bis 5 als Hohlprofil 30A ausgebildet ist. Die Hohlprofile 30A sind über metallische Verbindungselemente in Form von Querstangen, insbesondere Hohlprofilen, miteinander verbunden. Sie sind weiterhin über Standplatten 94 miteinander verbunden, die schwellenartig an der Unterseite der Hohlprofile 30A in Querrichtung ausgerichtet befestigt sind und die Befestigungslöcher 96 zum Festschrauben der Fahrachse 10 auf einem Untergrund bereitstellen. Der Innenraum der Hohlprofile 30A ist zum überwiegenden Teil durch eine Innenstruktur 80 aus Beton, insbesondere üblichem Zementbeton, gebildet. Ein Zwischenraum zwischen den Hauptträgern 20 ist zum Teil mit einer die Hauptträger 20 verbindenden Verbindungsstruktur 70 aus Beton gefüllt.

Im Rahmen des Ausführungsbeispiels werden die Innenstruktur 80 und die Verbindungsstruktur 70 als Betonstruktur beschrieben. Es kann sich jedoch gleichermaßen auch um eine Polymermaterialstruktur oder eine Struktur aus Metallschaum handeln.

Figur 3 zeigt die metallische Grundstruktur der Fahrachse 10, bestehend aus den beiden genannten Hohlprofilen 30A sowie den Verbindungselementen 40, welche an aufeinander zuweisenden Längsseiten 32D mittels Schweißverbindungen mit den Hohlprofilen 30A verbunden sind. Zusätzlich ist in Figur 3 zu erkennen, dass die Hohlprofile 30A über Aussparungen 36 verfügen, die jeweils den Innenraum der Hohlprofile 30A mit dem Zwischenraum zwischen den Hohlprofilen 30A verbinden.

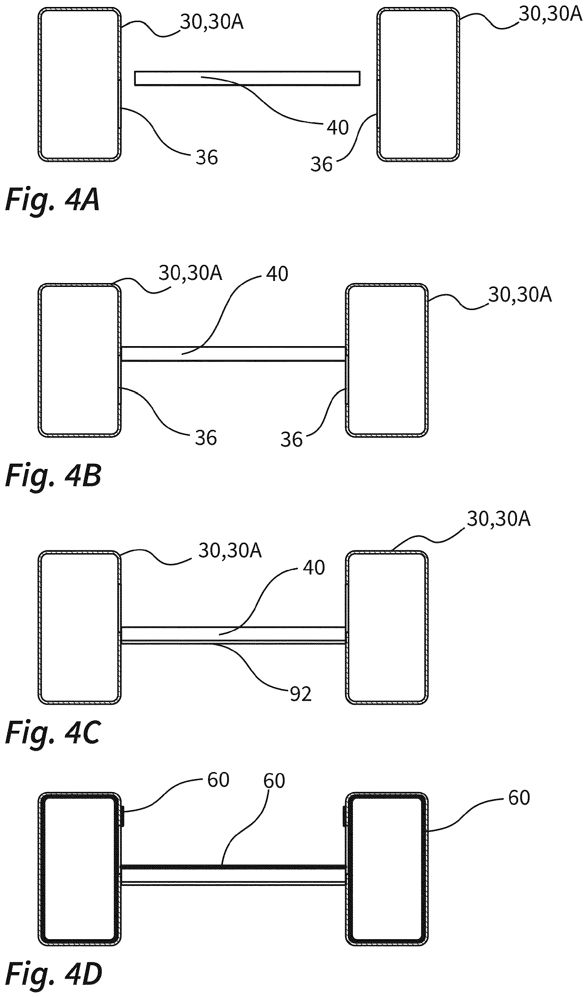

Anhand von Figur 4A bis 4F wird die Herstellung der Roboter-Fahrachse erläutert. Ausgehend von den bereits mit Aussparungen 36 versehenen Hohlprofilen 30A sowie den Verbindungselementen 40 wird zunächst eine einheitliche Metallstruktur geschaffen, indem die Verbindungselemente 40 an den aufeinander zuweisenden Außenwänden 32B der Hohlprofile 30A angeschweißt werden. Es ergibt sich eine etwa leiterartige Metallstruktur, die in Figur 4B dargestellt ist.

Anschließend wird diese Metallstruktur gewendet, so dass eine spätere Oberseite der Hohlprofile 30A nach unten weist. Weiterhin wird eine stabile oder formflexible Abdeckung unterhalb der Verbindungselemente 40 positioniert.

Wie in Figur 4D dargestellt ist, wird anschließend auf metallischen Oberflächen der Grundstruktur ein Haftvermittlungsmittel 60 flächig aufgebracht, welches insbesondere aus einem flüssigen Kleber besteht, beispielsweise Epoxidharz, welcher beispielsweise über Sprühdüsen, insbesondere am Ende von Einführlanzen, auf den verschiedenen Oberflächen der Metallstruktur aufgebracht wird. Anschließend wird ein Korundgranulat, welches in den Darstellungen nicht dargestellt ist, eingebracht. Die Granulatkörner des Korundgranulat werden bei Kontakt mit den Wandungen der Metallstruktur durch den Kleber gehalten und bilden somit nach Befestigung des Klebers eine raue Oberflächenstruktur.

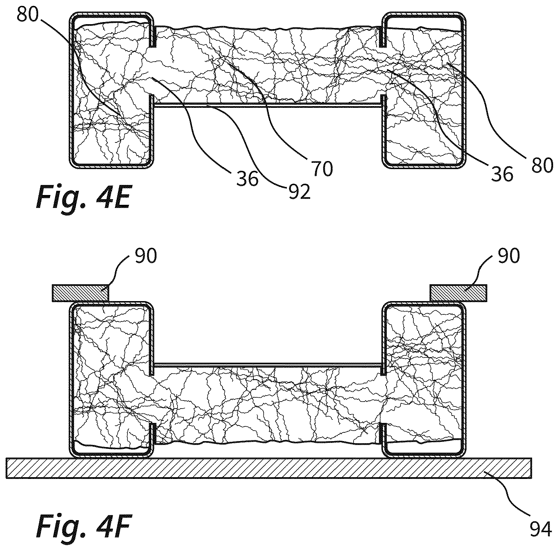

Anschließend wird in der Figur 4E verdeutlichten Weise Beton eingegossen, der sich sowohl in den Innenräumen der Hohlprofile 30A als auch in dem Zwischenraum zwischen den Hohlprofilen sammelt und dort aushärtet, so dass er dann die Innenstrukturen 80 und die Verbindungsstruktur 70 bildet. Aufgrund der Aussparungen 36 reicht es aus, den flüssigen Beton vom Zwischenbereich aus zuzugeben. Durch die Aussparung 36 hindurch läuft dieser dann in die Hohlprofile 30A. Aufgrund der umgedrehten Ausrichtung zu diesem Zeitpunkt ist dabei gewährleitet, dass der Beton die zu diesem Zeitpunkt nach unten weisenden Wandungen der Hohlprofile 30A erreicht und diese zumindest weitgehend vollständig bedeckt. Auch ist gewährleitet, dass der Beton im Bereich der Abdeckung 92 eine weitgehend plane Oberfläche bildet. Gegenüberliegend hierzu, im Falle der Ausrichtung der Figur 4E somit oben, bildet sich eine raue Oberfläche, was jedoch in der Praxis im Betrieb keine Nachteile darstellt.

Abschließend wird in der aus Figur 4F ersichtlichen Weise die mindestens eine Standplatte 94 an den Hauptträgern 20 angebracht. Gegenüberliegend hierzu werden die Führungsschienen 90 angebracht, insbesondere angeschraubt.

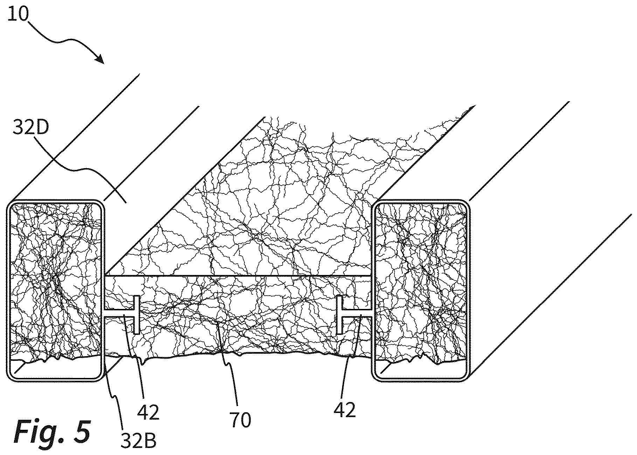

Die Figur 5 zeigt eine alternative Bauweise. Bei dieser ist vorgesehen, dass an der Außenwand 32B der Längsseiten 32D der Hohlprofile Zuganker 42 vorgesehen sind, die sich in die Verbindungsstruktur 70 aus Beton erstrecken und somit auch die Übertragung von Zugkräften zwischen den Hauptträgern 20 über die Verbindungsstruktur 70 gestatten. Obwohl in Figur 5 keine darüberhinausgehenden Verbindungselemente 40 entsprechend den Figuren 2 bis 4F dargestellt sind, können diese Verbindungselemente hier ebenfalls vorgesehen sein, so dass die Zuganker 42 lediglich eine zusätzliche Maßnahme darstellen. Es sind jedoch auch Gestaltungen denkbar, bei denen auf die Verbindungselemente 40 verzichtet wird, so dass die Hauptträger 20 lediglich über die Verbindungsstruktur 70 sowie ggf. über die in Figur 5 nicht dargestellten Standplatten 94 miteinander verbunden sind.

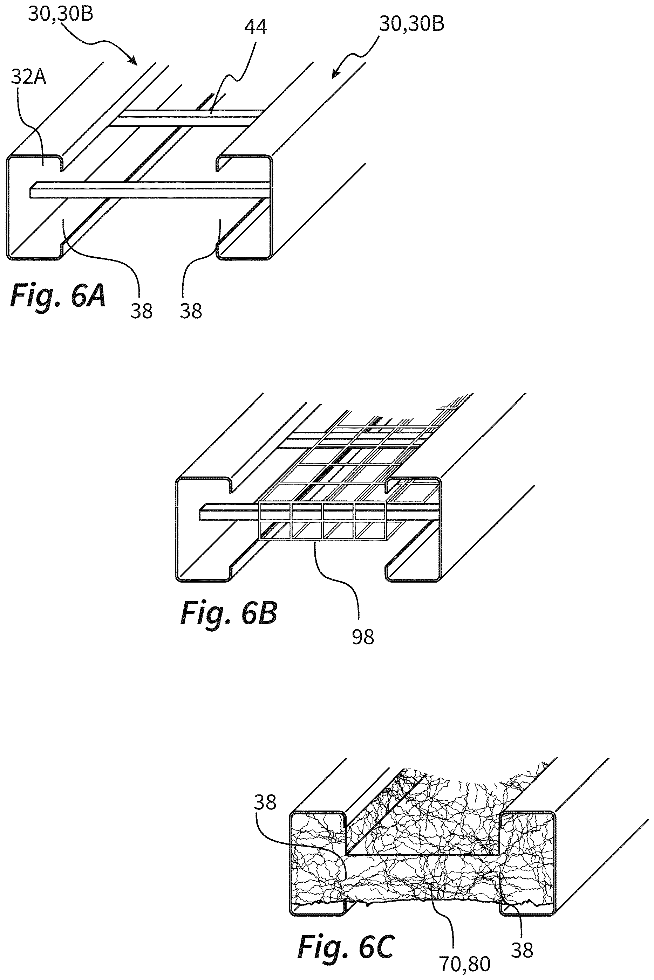

Die Figuren 6A bis 6C verdeutlichen eine weitere mögliche Bauweise der Roboter- Fahrachse 10. Hier sind die Profile 30 nicht als Hohlprofile 30A, sondern als C-Profile 30B ausgebildet. Die aufeinander zugerichteten Wandungen dieser C-Profile 30B weisen schlitzartige Profilunterbrechungen 38 auf. Die Verbindungselemente 40, die auch in diesem Fall vorzugsweise durch Metallstangen oder Metallhohlprofile gebildet sind, erstrecken sich bei dieser Gestaltung bis in die Profile 30 hinein und sind an der Innenwand 32A der voneinander wegweisenden Wandungen der Profile 30 befestigt, insbesondere angeschweißt. Zusätzlich weisen die gestaltenden Figuren 6A bis 6C eine metallische Armierungsstruktur 98 auf, die vor Einfügen des Betons platziert wird, um dem Beton größere Stabilität zu verleihen. Abweichend von der Figur 6B kann vorgesehen sein, dass diese Armierungsstruktur breiter ausgebildet ist, so dass sie sich bis in den Innenbereich der C-Profile 30B erstreckt

Wie anhand von Figur 6C zu erkennen ist, ist auch hier eine Betonstruktur vorgesehen, die durch Innenstrukturen innerhalb der C-Profile 30B und einer Verbindungsstruktur 70 gebildet wird. Diese kann aufgrund der Profildurchbrechungen 38 in einem Zug gegossen werden.

## Patentansprüche

1. Roboter-Fahrachse (10) zur translativen Verlagerung eines Roboterschlittens (110) mit den folgenden Merkmalen:
a. die Roboter-Fahrachse (10) verfügt über zwei parallel verlaufende Hauptträger (20), die jeweils außenseitig durch ein metallisches Profil (30) in Form eines Hohlprofils (30A) oder C-Profils (30B) begrenzt werden, und
b. die Hauptträger (20) tragen jeweils eine Führungsschiene (90),
**gekennzeichnet durch** die folgenden weiteren Merkmale:
c. die Hauptträger (20) sind mit einer Verbindungsstruktur (70) aus Beton miteinander verbunden, und
d. die Profile (30) der Hauptträger (20) weisen eine Innenstruktur (80) auf, die
- aus Beton, oder
- aus einem Polymermaterial, insbesondere aus Polymer-Strukturschaum, oder
- aus Metallschaum
gebildet ist.

2. Roboter-Fahrachse (10) nach Anspruch 1 mit den folgenden weiteren Merkmalen:
a. die Profile (30) sind Hohlprofile (30A) und verfügen an einer Längsseite (32D) über mindestens eine Aussparung (36), und
b. die Verbindungsstruktur (70) und die Innenstrukturen (80) bilden eine zusammenhängende und durch die Aussparungen (36) hindurchragende Betonstruktur (70, 80) oder Polymermaterialstruktur (70, 80) oder Metallschaumstruktur (70, 80).

3. Roboter-Fahrachse (10) nach Anspruch 1 mit den folgenden weiteren Merkmalen:
a. die Profile (30) sind C-Profile (30B) und verfügen aufeinander zu weisend über eine sich in Haupterstreckungsrichtung der Profile erstreckende Profilunterbrechung (38), und
b. die Verbindungsstruktur (70) und die Innenstrukturen (80) bilden eine zusammenhängende und durch die Profilunterbrechung (38) hindurchragende Betonstruktur (70, 80) oder Polymermaterialstruktur (70, 80) oder Metallschaumstruktur (70, 80).

4. Roboter-Fahrachse (10) nach einem der vorstehenden Ansprüche mit dem folgenden weiteren Merkmal:
a. die Hauptträger (20) sind mit mindestens einem metallischen Verbindungselement (40, 44) miteinander verbunden,
insbesondere mit mindestens einem der folgenden zusätzlichen Merkmale:
b. mindestens ein metallisches Verbindungselement (40, 44) wird von der Verbindungstruktur (70) umgeben, und/oder
c. mindestens ein metallisches Verbindungselement (40) ist an einer Außenseite von aufeinander zueinander weisenden Wandungen der Profile (30) befestigt, vorzugsweise mittels einer Schweißverbindung, oder
d. mindestens ein metallisches Verbindungselement ist an einer Innenseite von voneinander weg weisenden Wandungen der Profile befestigt, vorzugsweise mittels einer Schweißverbindung, und erstreckt sich durch die Aussparung (36) oder die Profilunterbrechung (38).

5. Roboter-Fahrachse (10) nach einem der vorstehenden Ansprüche mit dem folgenden weiteren Merkmal:
a. die Hauptträger (20) sind mit mindestens einer Standplatte versehen,
insbesondere mit dem folgenden zusätzlichen Merkmal:
b. es ist mindestens einer Standplatte (94) vorgesehen, die die Hauptträger (20) miteinander verbindet, insbesondere mittels einer Schweiß- oder Schraubverbindung.

6. Roboter-Fahrachse (10) nach einem der vorstehenden Ansprüche mit den folgenden weiteren Merkmalen:
a. an den Hauptträgern (20) sind Zuganker (42) vorgesehen, die sich in die Verbindungsstruktur (70) aus Beton oder aus Polymermaterial oder aus Metallschaum erstrecken.

7. Roboter-Fahrachse (10) nach einem der vorstehenden Ansprüche mit mindestens einem der folgenden weiteren Merkmale:
a. zwischen einer Innenwand (32A) der Profile (30) und der Innenstruktur (80) aus Beton oder aus Polymermaterial oder aus Metallschaum ist eine Schicht aus einem Haftvermittlungsmittel (60) vorgesehen, und/oder
b. zwischen einer Außenwand (32B) der Profile (30) oder dem metallischen Verbindungselement (40, 44) und der Verbindungsstruktur (70) aus Beton oder aus Polymermaterial oder aus Metallschaum ist eine Schicht aus einem Haftvermittlungsmittel (60) vorgesehen, insbesondere vorzugsweise mit dem folgenden zusätzlichen Merkmal:
c. das Haftvermittlungsmittel (60) umfasst eine flüssige Klebermasse sowie ein feinkörniges Granulat, insbesondere Epoxidharz und Korundgranulat.

8. Roboter-Fahrachse (10) nach einem der vorstehenden Ansprüche mit mindestens einem der folgenden weiteren Merkmale:
a. die Profile (30) weisen quer zur Fahrtrichtung eine Breite von weniger als 180 mm auf, und/oder
b. die Profile (30) weisen eine Wandungsstärke von maximal 6 mm auf, und/oder
c. die Innenstruktur (80) aus Beton oder Polymermaterial oder Metallschaum füllt einen lichten Querschnitt eines der Profile (30) nicht vollständig auf, wobei die Innenstruktur (80) jedoch mindestens an einer oberen Profilfläche (30C) des Querschnitts haftend anliegt, und/oder
d. die Verbindungsstruktur (70) ist oberseitig mit einer Abdeckung (92) versehen, insbesondere in Art eines flexiblen Flächenelements.

9. Robotersystem (100) mit den folgenden Merkmalen:
a. das Robotersystem (100) umfasst eine Roboter-Fahrachse (10), und
b. das Robotersystem (100) umfasst einen entlang der Roboter-Fahrachse (10) verfahrbaren Roboterschlitten (110), mittels dessen ein Roboter (120) in Fahrrichtung verfahrbar ist,
**gekennzeichnet durch** das folgende zusätzliche Merkmal:
c. die Roboter-Fahrachse (10) ist nach einem der vorstehenden Ansprüche ausgebildet.

10. Verfahren zur Herstellung einer Roboter-Fahrachse (10) nach einem der vorstehenden Ansprüche mit den folgenden Schritten:
a. die beiden Profile (30) werden in paralleler Ausrichtung positioniert, und
b. in die Profile (30) sowie in einen Zwischenraum zwischen den Profilen (30) wird Beton oder ein flüssiges Polymermaterial eingegossen oder die Profile (30) sowie der Zwischenraum zwischen den Profilen (30) werden mit einem Polymermaterial oder einem Metallschaum ausgeschäumt, und
c. der Beton oder das Polymermaterial oder der Metallschaum härtet aus und bildet die Innenstruktur (80) und die Verbindungsstruktur (70).

11. Verfahren nach Anspruch 10 mit den folgenden weiteren Merkmalen:
a. an den Längsseiten (32D) der als Hohlprofil (30A) ausgebildeten Profile (30) sind Aussparungen (36) vorgesehen, und
b. beim Einbringen des Betons oder des Polymermaterials oder des Metallschaums gelangt der Beton oder das Polymermaterial durch die Aussparungen (36) in die Hohlprofile (30A) oder in den Zwischenraum.

12. Verfahren nach Anspruch 10 mit den folgenden weiteren Merkmalen:
a. an den Längsseiten (32D) der als C-Profil (30B) ausgebildeten Profile (30) sind Profilunterbrechungen (38) vorgesehen, und
b. beim Einbringen des Betons oder des Polymermaterials oder des Metallschaums gelangt der Beton oder das Polymermaterial oder der Metallschaum durch die Profilunterbrechungen (38) in die C-Profile (30B) oder in den Zwischenraum.

13. Verfahren nach einem der Ansprüche 10 bis 12 mit dem folgenden weiteren Merkmal:
a. die Innenwände (32A) der Profile (30) werden vor dem Einbringen des Betons oder des Polymermaterials oder des Metallschaums zumindest teilweise mit einem Haftvermittlungsmittel (60) bedeckt,
insbesondere mit mindestens einem der folgenden zusätzlichen Merkmale:
b. das Haftvermittlungsmittel (60) umfasst eine flüssige Klebermasse, die insbesondere durch ein Epoxidharz oder ein anderweitiges Harz gebildet wird, und/oder
c. das Haftvermittlungsmittel (60) umfasst ein feinkörniges Granulat, insbesondere Korundgranulat oder anderweitiges mineralisches Granulat, und/oder
d. das Haftvermittlungsmittel (60) wird zumindest zum Teil mittels einer Lanze eingebracht, wobei die Lanze vorzugsweise durch eine der Aussparung (36) in das Hohlprofil (30A) eingebracht wird.

14. Verfahren nach einem der Ansprüche 10 bis 13 mit dem folgenden weiteren Merkmal:
a. zum Zwischenraum weisende Außenwände (32B) der Profile (30) und/oder mindestens ein metallisches Verbindungselement (40) werden vor dem Einbringen des Betons oder des Polymermaterials oder des Metallschaums zumindest teilweise mit einem Haftvermittlungsmittel (60) bedeckt,
insbesondere mit mindestens einem der folgenden zusätzlichen Merkmale:
b. das Haftvermittlungsmittel (60) umfasst eine flüssige Klebermasse, die insbesondere durch ein Epoxidharz oder ein anderweitiges Harz gebildet wird, und/oder
c. das Haftvermittlungsmittel (60) umfasst ein feinkörniges Granulat, insbesondere ein Korundgranulat oder anderweitiges mineralisches Granulat.

15. Verfahren nach einem der Ansprüche 10 bis 14 mit den folgenden weiteren Merkmalen:
a. beim Einbringen des Betons oder des Polymermaterials oder des Metallschaums in die Profile (30) sind die Profile (30) gewendet, so dass ihre Oberseite nach unten gerichtet ist.

## Claims

1. Robot travel axis (10) for the displacement of a robot carriage (110) in translation, having the following features:
a. the robot travel axis (10) has two main supports (20) which run in parallel and are each delimited on the outside by a metallic profile (30) in the form of a hollow profile (30A) or C-profile (30B), and
b. the main supports (20) each carry a guide rail (90),
**characterized by** the following further features:
c. the main supports (20) are connected together by means of a connecting structure (70) of concrete, and
d. the profiles (30) of the main supports (20) have an inner structure (80) which is formed
- of concrete, or
- of a polymer material, in particular of polymer structural foam, or
- of metal foam.

2. Robot travel axis (10) according to Claim 1, having the following further features:
a. the profiles (30) are hollow profiles (30A) and have at least one opening (36) on a longitudinal side (32D), and
b. the connecting structure (70) and the inner structures (80) form a cohesive concrete structure (70, 80) or polymer material structure (70, 80) or metal foam structure (70, 80) which projects through the openings (36).

3. Robot travel axis (10) according to Claim 1, having the following further features:
a. the profiles (30) are C-profiles (30B) and have, facing one another, a profile interruption (38) extending in the main direction of extent of the profiles, and
b. the connecting structure (70) and the inner structures (80) form a cohesive concrete structure (70, 80) or polymer material structure (70, 80) or metal foam structure (70, 80) which projects through the profile interruption (38).

4. Robot travel axis (10) according to one of the preceding claims, having the following further feature:
a. the main supports (20) are connected together by means of at least one metallic connecting element (40, 44),
in particular having at least one of the following additional features:
b. at least one metallic connecting element (40, 44) is surrounded by the connecting structure (70), and/or
c. at least one metallic connecting element (40) is fastened, preferably by means of a welded connection, to an outer side of mutually facing walls of the profiles (30), or
d. at least one metallic connecting element is fastened, preferably by means of a welded connection, to an inner side of walls of the profiles that face away from one another and extends through the opening (36) or the profile interruption (38).

5. Robot travel axis (10) according to one of the preceding claims, having the following further feature:
a. the main supports (20) are provided with at least one stand plate,
in particular having the following additional feature:
b. there is at least one stand plate (94) which connects the main supports (20) together, in particular by means of a welded or screw connection.

6. Robot travel axis (10) according to one of the preceding claims, having the following further features:
a. tension rods (42) are provided on the main supports (20), which tension rods extend into the connecting structure (70) of concrete or of polymer material or of metal foam.

7. Robot travel axis (10) according to one of the preceding claims, having at least one of the following further features:
a. a layer of an adhesion-promoting agent (60) is provided between an inner wall (32A) of the profiles (30) and the inner structure (80) of concrete or of polymer material or of metal foam, and/or
b. a layer of an adhesion-promoting agent (60) is provided between an outer wall (32B) of the profiles (30) or the metallic connecting element (40, 44) and the connecting structure (70) of concrete or of polymer material or of metal foam, in particular preferably having the following additional feature:
c. the adhesion-promoting agent (60) comprises a liquid adhesive composition and fine-grained granules, in particular epoxy resin and corundum granules.

8. Robot travel axis (10) according to one of the preceding claims, having at least one of the following further features:
a. the profiles (30) have a width transverse to the travel direction of less than 180 mm, and/or
b. the profiles (30) have a wall thickness of not more than 6 mm, and/or
c. the inner structure (80) of concrete or polymer material or metal foam does not completely fill a clear cross-section of one of the profiles (30), wherein the inner structure (80) is, however, in contact in an adhering manner at least with an upper profile surface (30C) of the cross-section, and/or
d. the connecting structure (70) is provided on the upper side with a covering (92), in particular in the manner of a flexible sheet-form element.

9. Robot system (100), having the following features:
a. the robot system (100) comprises a robot travel axis (10), and
b. the robot system (100) comprises a robot carriage (110) which is movable along the robot travel axis (10) and by means of which a robot (120) is movable in a travel direction,
**characterized by** the following additional feature:
c. the robot travel axis (10) is configured according to one of the preceding claims.

10. Method for producing a robot travel axis (10) according to one of the preceding claims, having the following steps:
a. the two profiles (30) are positioned in a parallel orientation, and
b. concrete or a liquid polymer material is poured into the profiles (30) and also into an intermediate space between the profiles (30), or the profiles (30) and the intermediate space between the profiles (30) are foam-filled with a polymer material or a metal foam, and
c. the concrete or the polymer material or the metal foam cures and forms the inner structure (80) and the connecting structure (70).

11. Method according to Claim 10, having the following further features:
a. openings (36) are provided on the longitudinal sides (32D) of the profiles (30) in the form of hollow profiles (30A), and
b. when the concrete or the polymer material or the metal foam is introduced, the concrete or the polymer material passes through the openings (36) into the hollow profiles (30A) or into the intermediate space.

12. Method according to Claim 10, having the following further features:
a. profile interruptions (38) are provided on the longitudinal sides (32D) of the profiles (30) in the form of C-profiles (30B), and
b. when the concrete or the polymer material or the metal foam is introduced, the concrete or the polymer material or the metal foam passes through the profile interruptions (38) into the C-profiles (30B) or into the intermediate space.

13. Method according to one of Claims 10 to 12, having the following further feature:
a. the inner walls (32A) of the profiles (30) are covered at least partially with an adhesion-promoting agent (60) before the concrete or the polymer material or the metal foam is introduced,
in particular having at least one of the following additional features:
b. the adhesion-promoting agent (60) comprises a liquid adhesive composition, which is formed in particular by an epoxy resin or another type of resin, and/or
c. the adhesion-promoting agent (60) comprises fine-grained granules, in particular corundum granules or another type of mineral granules, and/or
d. the adhesion-promoting agent (60) is introduced at least in part by means of a lance, wherein the lance is preferably introduced into the hollow profile (30A) through one of the openings (36).

14. Method according to one of Claims 10 to 13, having the following further feature:
a. outer walls (32B) of the profiles (30) that face the intermediate space and/or at least one metallic connecting element (40) are covered at least partially with an adhesion-promoting agent (60) before the concrete or the polymer material or the metal foam is introduced,
in particular having at least one of the following additional features:
b. the adhesion-promoting agent (60) comprises a liquid adhesive composition, which is formed in particular by an epoxy resin or another type of resin, and/or
c. the adhesion-promoting agent (60) comprises fine-grained granules, in particular corundum granules or another type of mineral granules.

15. Method according to one of Claims 10 to 14, having the following further feature:
a. when the concrete or the polymer material or the metal foam is introduced into the profiles (30), the profiles (30) are turned so that their upper side is oriented downward.

## Revendications

1. Axe de roulement de robot (10) pour le décalage en translation d'un chariot de robot (110), comprenant les particularités suivantes :
a) l'axe de roulement de robot (10) dispose de deux supports principaux (20) s'étendant en parallèle qui sont respectivement délimités côté extérieur par un profilé métallique (30) sous la forme d'un profilé creux (30A) ou d'un profilé en C (30B), et
b) les supports principaux (20) portent respectivement un rail de guidage (90), **caractérisé par** les particularités supplémentaires suivantes :
c) les supports principaux (20) sont reliés l'un à l'autre par une structure de liaison (70) en béton, et
d) les profilés (30) des supports principaux (20) présentent une structure intérieure (80) qui est formée
- en béton, ou
- en un matériau polymère, en particulier en mousse structurelle polymère, ou
- en mousse métallique.

2. Axe de roulement de robot (10) selon la revendication 1, comprenant les particularités supplémentaires suivantes :
a) les profilés (30) sont des profilés creux (30A) et disposent sur une face longitudinale (32D) d'au moins un évidement (36), et
b) la structure de liaison (70) et les structures intérieures (80) forment une structure de béton (70, 80) ou une structure de matériau polymère (70, 80) ou une structure de mousse métallique (70, 80) cohérente et dépassant à travers les évidements (36).

3. Axe de roulement de robot (10) selon la revendication 1, comprenant les particularités supplémentaires suivantes :
a) les profilés (30) sont des profilés en C (30B) et disposent d'une rupture de profilé (38) orientée l'une vers l'autre et s'étendant dans la direction d'extension principale des profilés, et
b) la structure de liaison (70) et les structures intérieures (80) forment une structure de béton (70, 80) ou une structure de matériau polymère (70, 80) ou une structure de mousse métallique (70, 80) cohérente et dépassant à travers la rupture de profilé (38).

4. Axe de roulement de robot (10) selon l'une quelconque des revendications précédentes, comprenant la particularité supplémentaire suivante :
a) les supports principaux (20) sont reliés l'un à l'autre par au moins un élément de liaison métallique (40, 44),
comprenant en particulier au moins l'une des particularités supplémentaires suivantes :
b) au moins un élément de liaison métallique (40, 44) est entouré de la structure de liaison (70), et/ou
c) au moins un élément de liaison métallique (40) est fixé à une face extérieure de flancs tournés l'un vers l'autre des profilés (30), de préférence au moyen d'un assemblage soudé, ou
d) au moins un élément de liaison métallique est fixé à une face intérieure des flancs détournés l'un de l'autre des profilés, de préférence au moyen d'un assemblage soudé et s'étend à travers l'évidement (36) ou la rupture de profilé (38).

5. Axe de roulement de robot (10) selon l'une quelconque des revendications précédentes, comprenant la particularité supplémentaire suivante :
a) les supports principaux (20) sont munis d'au moins une plaque de base, comprenant en particulier la particularité supplémentaire suivante :
b) au moins une plaque de base (94) est prévue qui relie les supports principaux (20) l'un à l'autre, en particulier par un assemblage soudé ou vissé.

6. Axe de roulement de robot (10) selon l'une quelconque des revendications précédentes, comprenant les particularités supplémentaires suivantes :
a) sur les supports principaux (20), des tirants (42) sont prévus qui s'étendent dans la structure de liaison (70) en béton ou en matériau polymère ou en mousse métallique.

7. Axe de roulement de robot (10) selon l'une quelconque des revendications précédentes, comprenant au moins l'une des particularités supplémentaires suivantes :
a) une couche d'un agent adhésif (60) est prévue entre un flanc intérieur (32A) des profilés (30) et la structure intérieure (80) en béton ou en matériau polymère ou en mousse métallique, et/ou
b) une couche d'un agent adhésif (60) est prévue entre un flanc extérieur (32B) des profilés (30) ou l'élément de liaison métallique (40, 44) et la structure de liaison (70) en béton ou en matériau polymère ou en mousse métallique, comprenant en particulier de préférence la particularité supplémentaire suivante :
c) l'agent adhésif (60) comprend une masse collante liquide ainsi qu'un granulé à grains fins, en particulier une résine époxyde et un granulé de corindon.

8. Axe de roulement de robot (10) selon l'une quelconque des revendications précédentes, comprenant au moins l'une des particularités supplémentaires suivantes :
a) les profilés (30) présentent transversalement au sens de la marche une largeur inférieure à 180 mm, et/ou
b) les profilés (30) présentent une épaisseur de flanc d'un maximum de 6 mm, et/ou
c) la structure intérieure (80) en béton ou en matériau polymère ou en mousse métallique ne comble pas complètement une section transversale libre d'un des profilés (30), dans lequel cependant la structure intérieure (80) est adjacente de manière adhésive au moins à une surface de profilé supérieure (30C) de la section transversale, et/ou
d) la structure de liaison (70) est munie côté supérieur d'un recouvrement (92) en particulier à la manière d'un élément plan flexible.

9. Système de robot (100), comprenant les particularités suivantes :
a) le système de robot (100) comprend un axe de roulement de robot (10), et
b) le système de robot (100) comprend un chariot de robot (110) mobile le long de l'axe de roulement de robot (10) au moyen duquel un robot (120) est mobile dans le sens de la marche,
**caractérisé par** la particularité supplémentaire suivante :
c) l'axe de roulement de robot (10) est réalisé selon l'une quelconque des revendications précédentes.

10. Procédé permettant de fabriquer un axe de roulement de robot (10) selon l'une quelconque des revendications précédentes, comprenant les étapes suivantes :
a) les deux profilés (30) sont positionnés dans un alignement parallèle, et
b) du béton ou un matériau polymère liquide est versé dans les profilés (30) ainsi que dans un espace entre les profilés (30), ou les profilés (30) ainsi que l'espace entre les profilés (30) sont garnis de mousse avec un matériau polymère ou une mousse métallique, et
c) le béton ou le matériau polymère ou la mousse métallique durcit et forme la structure intérieure (80) et la structure de liaison (70).

11. Procédé selon la revendication 10, comprenant les particularités supplémentaires suivantes :
a) des évidements (36) sont prévus sur les faces longitudinales (32D) des profilés (30) réalisés sous forme de profilé creux (30A), et
b) lors de l'introduction du béton ou du matériau polymère ou de la mousse métallique, le béton ou le matériau polymère atteint les profilés creux (30A) ou l'espace à travers les évidements (36).

12. Procédé selon la revendication 10, comprenant les particularités supplémentaires suivantes :
a) des ruptures de profilé (38) sont prévues sur les faces longitudinales (32D) des profilés (30) réalisés sous forme de profilé en C (30B), et
b) lors de l'introduction du béton ou du matériau polymère ou de la mousse métallique, le béton ou le matériau polymère ou la mousse métallique atteint les profilés en C (30B) ou l'espace à travers les ruptures de profilé (38).

13. Procédé selon l'une quelconque des revendications 10 à 12, comprenant la particularité supplémentaire suivante :
a) les flancs intérieurs (32A) des profilés (30) sont recouverts au moins partiellement d'un agent adhésif (60) avant l'introduction du béton ou du matériau polymère ou de la mousse métallique,
comprenant en particulier au moins l'une des particularités supplémentaires suivantes :
b) l'agent adhésif (60) comprend une masse collante liquide qui est formée en particulier par une résine époxyde ou une autre résine, et/ou
c) l'agent adhésif (60) comprend un granulé à grains fins, en particulier un granulé de corindon ou un autre granulé minéral, et/ou
d) l'agent adhésif (60) est introduit au moins en partie au moyen d'une lance, la lance étant de préférence introduite dans le profilé creux (30A) à travers l'un des évidements (36).

14. Procédé selon l'une quelconque des revendications 10 à 13, comprenant la particularité supplémentaire suivante :
a) les flancs extérieurs (32B), tournés vers l'espace, des profilés (30), et/ou au moins un élément de liaison métallique (40) sont recouverts au moins partiellement d'un agent adhésif (60) avant l'introduction du béton ou du matériau polymère ou de la mousse métallique,
comprenant en particulier au moins l'une des particularités supplémentaires suivantes :
b) l'agent adhésif (60) comprend une masse collante liquide qui est formée en particulier par une résine époxyde ou une autre résine, et/ou
c) l'agent adhésif (60) comprend un granulé à grains fins, en particulier un granulé de corindon ou un autre granulé minéral.

15. Procédé selon l'une quelconque des revendications 10 à 14, comprenant les particularités supplémentaires suivantes :
a) lors de l'introduction du béton ou du matériau polymère ou de la mousse métallique dans les profilés (30), les profilés (30) sont retournés de sorte que leur face supérieure est dirigée vers le bas.
